# EUROPÄISCHE PATENTSCHRIFT

(11) **EP 0 740 131 B1**
(45) Veröffentlichungstag und Bekanntmachung des Hinweises auf die Patenterteilung: **31.05.2000**
(21) Anmeldenummer: 96104844.4
(22) Anmeldetag: 27.03.1996
(51) Int. Cl.: G01C 9/20

(54) **Resistiver Neigungssensor**
Resistive inclination sensor
Capteur d'inclinaison résistif

(30) Priorität: 01.04.1995 DE 19512374
(43) Veröffentlichungstag der Anmeldung: 30.10.1996
(73) Patentinhaber: Delphi Automotive Systems Deutschland GmbH, D-42369 Wuppertal (DE)
(72) Erfinder: Uhl, Joachim, Dipl.-Ing,, 51674 Wiehl (DE); Konrad, Reimund, Dipl.-Ing., 51647 Gummersbach (DE)
(74) Vertreter: Cohausz & Florack

(56) Entgegenhaltungen:
- DE-A- 4 308 056
- FR-A- 2 647 544
- FR-A- 2 668 824
- US-A- 3 290 786
- US-A- 3 442 023

## Beschreibung

Die Erfindung betrifft einen Neigungssensor, insbesondere in Kombination mit einer Diebstahlwarnanlage für Automobile, mit einem an dem auf seine Neigung hin zu überwachenden Körper angebrachten und auf die Relativlage des Körpers zur Schwerkraftrichtung empfindlichen Sensoreinheit, deren elektrische Ausgangsanschlüsse mit einer Auswerteeinrichtung verbunden sind, aus deren Ausgangssignal die Neigung ermittelbar ist, wobei die Sensoreinheit zur Bestimmung der Neigung in Längs-und/oder in Querrichtung aus mindestens zwei Paaren konzentrisch angeordneter Außenelektroden und aus einer dazu zentralen kugelförmigen Mittelelektrode besteht.

Ein Neigungssensor ist bekannt aus der DE-PS 42 11 507. Bei dieser Vorrichtung ist ein Sensor vorgesehen, dessen Widerstand sich unter dem Einfluß einer Durchbiegung ändert, indem er als an seinen beiden Enden im Kraftfahrzeug eingespannter durchbiegbarer Balken ausgebildet ist, in dessen Mitte eine Masse befestigt ist. Bei einer Neigung des Kraftfahrzeuges gegenüber der Waagerechten erfolgt eine Verstimmung der elektrischen Brückenschaltung, wodurch das der Neigung proportionale Meßsignal gewonnen wird.

Aus der DE 42 43 587 ist eine Vorrichtung der eingangs genannten Art bekannt, bei der der Sensor aus einem einen Kondensator bildenden Halbleiterbauelement besteht, welches seine Kapazität unter dem Einfluß einer Neigungsabhängigen Beschleunigung ändert.

Ein Neigungssensor der eingangs genannten Art ist aus der DE 39 42 279 A1 bekannt. Der eindimensional arbeitende Sensor weist ein geschlossenes Gehäuse mit Außenelektroden auf, die sich über einen Teil der Innenfläche des Gehäuses erstrecken, sowie eine Mittelelektrode . Der Gehäuseinnenraum teilt sich auf zwischen einem elektrolytischem Fluid und einer "Luftblase".

Ein anderer Beschleunigungs- bzw. Neigungssensor, der insbesondere für Kraftfahrzeuge Einsatz findet, ist aus der DE 41 14 992 bekannt. Dieser Sensor enthält als Sensorelement einen in einem Hohlraum eingeschlossenen Kontaktkörper in Form eines Quecksilbertropfens.

Die FR 2 647 544 A1 beschreibt eine weitere Vorrichtung zum Erfassen eines Neigungswinkels. Ein in dieser Vorrichtung eingesetzter Sensor weist einen ersten elektrischen Leiter in Form eines geschlossenen Hohlkörpers auf, der mit einer leitenden Flüssigkeit gefüllt ist. Der Hohlkörper ist entlang mindestens einer Symmetrieebene durch eine Isolierung in zwei elektrisch voneinander isolierte Teile geteilt. Jeder dieser Teile ist über Anschlüsse mit einer Auswerteeinheit verbunden. Im Zentrum des Hohlkörpers befindet sich ein zweites leitfähiges Element, das mit einer Stromzufuhr verbunden ist. Zur Messung des Neigungswinkels wird über das zweite leitfähige Element ein Strom eingeprägt, der über die Anschlüsse der Teile des Hohlkörpers der Auswerteeinheit zugeführt werden. Aus dem jeweiligen Wert der über die verschiedenen Teile erhaltenen Ströme wird dann in der Auswerteeinheit der aktuelle Neigungswinkel bestimmt.

In der FR 2 668 824 A1 wird eine Vorrichtung zur Messung eines Neigungswinkels vorgeschlagen, die ein dichtes, zum Teil mit einer Flüssigkeit gefülltes Gefäß aufweist. Im Randbereich des Gefäßes sind Elektroden in Längsrichtung regelmäßig um eine Symmetrieachse des Gefäßes herum angeordnet. Die Lage einer der Elektroden kann auch der Symmetrieachse entsprechen. Nacheinander wird zwischen jeweils zwei der Elektroden eine elektrische Spannung angelegt und dabei der elektrische Widerstand zwischen den beiden Elektroden bestimmt. Der gemessene Widerstand wird als Maß für den jeweiligen Neigungswinkel verwendet.

Der Einsatz einer Winkelmeßeinrichtung für eine Vorrichtung zur Diebstahlsicherung eines Kraftfahrzeugs ist aus der DE 43 08 056 A1 bekannt. Die hier eingesetzten Sensorvorrichtung liefert mehrere Meßsignalen. Für ein Umschalten zwischen diesen Meßsignalen kann ein von einem Mikrokontroller gesteuertes Multiplexglied vorgesehen sein.

Die bekannten Sensoren sind verbesserungsbedürftig, da sie einerseits Nichtlinearitäten über den geforderten Meßbereich aufweisen können und andererseits innerhalb des für den Einsatz in der Automobilindustrie verlangten Temperaturbereichs Instabilitäten auftreten können.

Der Erfindung liegt davon ausgehend die Aufgabe zugrunde einen Neigungssensor zu schaffen, der einfach aufgebaut ist und der eine zuverlässige und meßtechnisch einfache Erfassung der Neigung sowohl in Quer- als auch in Längsrichtung ermöglicht.

Diese Aufgabe wird erfindungsgemäß dadurch gelöst, daß die Sensoreinheit innerhalb eines Gehäuse angeordnet ist, mittels dessen sie an dem zu überwachenden Körper angebracht ist, wobei das Gehäuse als Hohlkugel ausgebildet ist, deren Zentrum die Mittelelektrode bildet, und teilweise derart mit einer elektrisch leitfähigen Flüssigkeit ausgefüllt ist, daß die Mittelelektrode in der Höhe der Flüssigkeitsoberfläche liegt, und daß die konzentrischen Außenelektroden eine drahtförmige Struktur aufweisen und in einer zur Sensorhochachse parallelen Ebene teilkreisförmig gebogen sind, wobei die durch die neigungsabhängige Relativlage zwischender Flüssigkeitsoberfläche und der Elektrodenanordnung bedingte Änderung des zwischen den Außenelektroden und der Mittelelektrode ausgebildeten radialen elektrischen Strömungsfeldes über eine Widerstandsmeßeinrichtung erfaßbar ist, deren Ausgangssignal der Auswerteeinrichtung zuführbar ist.

Die Erfindung zeichnet sich dadurch aus, daß sich einfache Auswertungen sowohl in Längs- als auch in Querrichtung des auf seine Neigung hin zu überwachenden Körpers untersuchen und meßtechnisch voneinander trennen lassen. Das elektrische Ersatzschaltbild des so ausgebildeten Sensors läßt sich darstellen durch eine Parallelschaltung von vier Leitwerten, wobei jeweils zwei Leitwerte einem gemeinsamen Zweig (Längszweig oder Querzweig) entsprechen. Die Auswertung des neigungsabhängigen Meßsignales erfolgt dabei durch bekannte Halbbrückenschaltungen. Weil das Gehäuse als Halbkugel ausgebildet ist, deren Zentrum die Mittenelektrode bildet, ergibt sich eine Kompensation der durch Anhaftung der elektrisch leitfähigen Flüssigkeit an den Außenelektroden auftretenden Effekte. Dies ist darauf zurückzuführen, daß die Anhaftung des verwendeten Mediums an beiden Außenelektroden gleich ist. Darüber hinaus sorgt die Hohlkugelform dafür, daß die Tendenz der elektrisch leitfähigen Flüßigkeit zur Tröpfchenbildung minimiert ist. Durch das zwischen der Mittelelektrode und den kreisförmig berandeten Außenelektroden gebildete elektrische Strömungsfeld ergibt sich als Auswertungsgröße der Widerstandswert innerhalb der Sensoreinheit. Durch die Radialsymmetrie ist dabei maßgeblich der zwischen der kugelförmigen Mittelelektrode und dem Umfang der Außenelektrode gebildete Sektorenbereich des von der elektrisch leitfähigen Flüssigkeit ausgefüllten Volumens. Je nach Neigung des Sensors in Bezug auf die Schwerkraftrichtung sind unterschiedliche Sektorenbereiche von der Flüssigkeit ausgefüllt. Durch die Radialsymmetrie des Sensors und die konzentrische Zuordnung der Elektroden zueinander ist die Leitfähigkeitszunahme bzw. -abnahme auf den beiden einer Neigungsrichtung (Quer-/Längsrichtung) zugeordneten Seiten über den gesamten Meßbereich gegenläufig konstant. Dies ist darauf zurückzuführen, daß eine Leitfähigkeitsabnahme auf der einen Seite eines Zweiges mit der gleich großen Leitfähigkeitszunahme auf der anderen Seite dieses Zweiges einhergeht. Durch die erfindungsgemäße Gestaltung des Sensorsystems ist also die Gesamtleitfähigkeit des Meßzweiges unabhängig von der Neigung des Sensors stets konstant. Dies führt einerseits zur gewünschten Linearität der Meßanordnung über einen weiten Winkelbereich, der im wesentlichen nur von dem Überdeckungswinkel der kreisförmig berandeten Außenelektroden begrenzt ist, und andererseits führt diese Eigenschaft zu einer Kompensation von Temperatur bedingten Erscheinungen, wie Temperaturabhängigkeit der Sensorflüssigkeit.

Eine erste Alternative zur Auswertung der Widerstandsänderungen in den Längs- bzw. Querzweigen, sieht vor, daß die Änderung des elektrischen Strömungsfeldes mittels einer herkömmlichen Wheatstone'schen Brückenschaltung meßbar ist, wobei das Meßsignal in das Meßsignal für die Neigung in Längsrichtung bzw. in das Meßsignal für die Querrichtung über Multiplex, insbesondere Frequenz oder Zeitmultiplex zerlegbar ist.

Eine zweite, gemäß der Erfindung bevorzugte, Alternative sieht vor, daß die Mittelelektrode mit einem Konstantstrom, insbesondere einem Konstant-Wechselstrom oder Konstant-Rechteckstrom, beaufschlagbar ist und daß das Meßsignal für Längs- und Querneigung zeitparallel auswertbar ist durch Erfassung jeweils mindestens eines der beiden Teilströme eines in Längs- bzw. in Querrichtung verlaufenden Zweiges. Diese Variante besitzt den entscheidenden Vorteil, daß die Auswertung des Meßsignals in Längs- bzw. Querrichtung gleichzeitig erfolgen kann. Dies ist darauf zurückzuführen, daß durch die Einspeisung eines Konstantstromes in die Mittelelektrode, d. h. in den gemeinsamen Anschlußpunkt der vier zueinander parallel geschalteten Leitwerte im Ersatzschaltbild, die Summe der Leitwerte im jeweils betrachteten Zweig (Längszweig oder Querzweig) unabhängig von der Neigung des Sensors stets konstant ist. Die Änderung der einzelnen Leitwerte im Längszweig ist dabei unbeeinflußt von der Änderung der Leitwerte im Querzweig (und umgekehrt). Dabei reicht es aus Gründen der Vereinfachung des Meßaufwandes aus, wenn je Zweig (Längsoder Querzweig) nur einer der beiden Leitwerte analysiert wird.

Ferner sieht die Erfindung vor, daß der Überdeckungswinkel der teilkreisförmigen Außenelektroden zwischen 60° und 120° liegt. Diese bevorzugte Gestaltung führt zu einem Neigungssensor, welcher innerhalb eines Bereiches von +/-60° gegenüber der Horizontalen ein lineares Ausgangssignal aufweist. Dies ist wiederum auf den radialsymmetrischen Verlauf des zwischen Mittelelektrode und den Außenelektroden ausgebildeten elektrischen Stömungsfeldes im Bereich des von der leitfähigen Flüssigkeit ausgefüllten Volumens innerhalb des Gehäuses zurückzuführen.

Die Mittelelektrode ist bevorzugt als quasi-punktförmige Kugelelektrode ausgebildet. Diese Ausbildung begünstigt den radialsymmetrischen Verlauf des Strömungsfeldes. Damit keine Verfälschung des radialen Strömungsfeldes durch den Einfluß der Zuleitung zur Mittelelektrode entsteht, ist erfindungsgemäß vorgesehen, daß die Verbindung zwischen der Kugelelektrode und ihrem elektrischen Ausgangsanschluß elektrisch isolierend gestaltet ist. Dabei ist der elektrisch isolierende Bereich der Mittelelektrode bevorzugt kegelförmig ausgebildet, um die Radialsymmetrie des Strömungsfeldes zu erhalten.

Die bevorzugte, jedoch nicht einzige Anwendung des erfindungsgemäßen Neigungssensors ist im Automobilbereich zu sehen, wenn der Neigungssensor mit einer Diebstahlwarnanlage für Kraftfahrzeuge zusammenarbeitet. Hierdurch können auch solche Diebstähle detektiert werden, bei denen herkömmliche Alarmanlagen oder Wegfahrsperren keine Wirkung haben, beispielsweise wenn das Fahrzeug auf ein Tieflader gehoben wird.

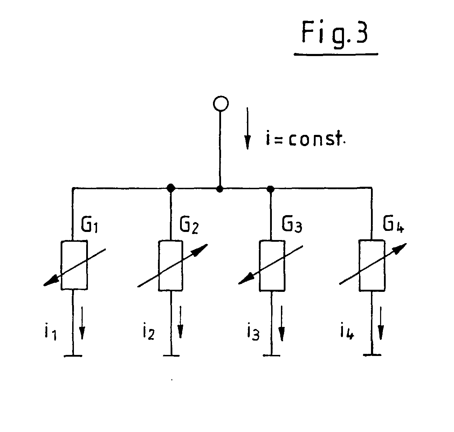

- Fig. 3: das elektrische Ersatzschaltbild für den erfindungsgemäßen Neigungssensor

Der Neigungssensor gemäß dem in der Zeichnung dargestellten Ausführungsbeispiel der Erfindung besteht aus einem kugelförmigen Gehäuse 1, innerhalb dem eine Sensoranordnung untergebracht ist. Die Sensoranordnung besteht aus Außenelektroden 2a,2b,2a',2b', die jeweils teilkreisförmig gebogen sind und konzentrisch innerhalb des Gehäuses 1 angeordnet sind. Der Überdeckungswinkel einer jeden Außenelektrode beträgt etwa 120°. Im Zentrum des Gehäuses 1 und entsprechend im Zentrum der Außenelektroden ist eine Mittelelektrode 3 angeordnet, die als Kugelelektrode ausgebildet ist.

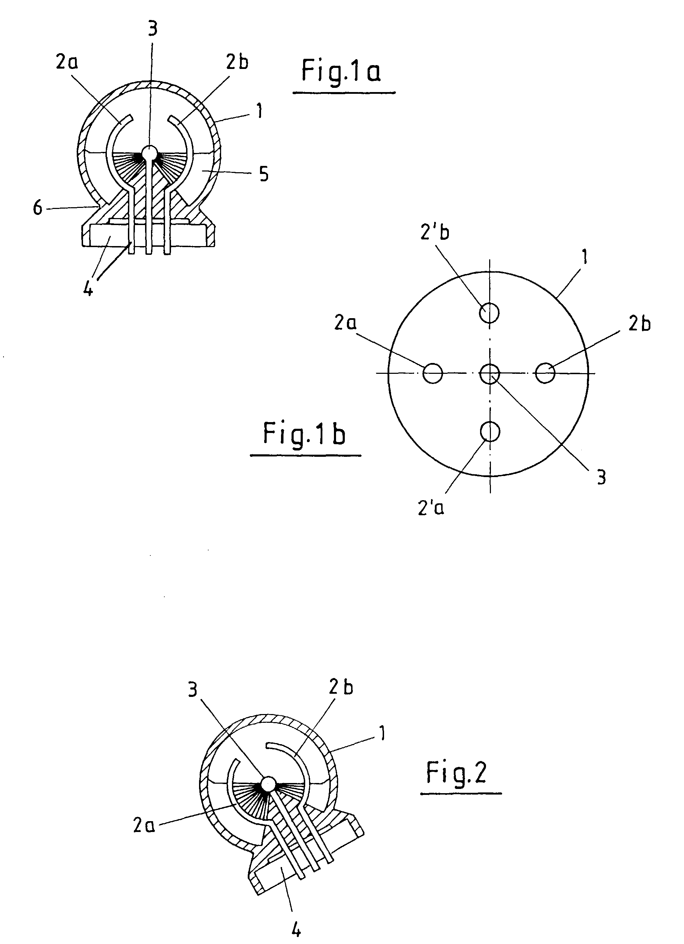

Wie aus Fig. 1b hervorgeht, die einen Schnitt durch Fig. 1a in der durch die Mittelelektrode 3 hindurchgehenden Horizontalebene zeigt, hervorgeht, sind zwei Paare von Außenelektroden 2a,2b sowie 2a',2b' vorgesehen, die in zueinander senkrechten Orientierungsachsen liegen.

Die elektrischen Anschlüsse der vier Außenelektroden 2a, 2b,2a',2b' sowie der Mittelelktrode 3 sind zu einem Ausgangsanschluß 4 geführt und sind von dort von außerhalb des Gehäuses zugänglich.

Das Innere des Gehäuses 1 ist mit einer elektrisch leitfähigen Flüssigkeit gefüllt. Hierbei handelt es sich um ein organisches Lösungsmittel aus aliphatischen Kohlenwasserstoffen, die über ein Sauerstoffatom verbunden sind. Zur Erzielung der gewünschten Leitfähigkeit ist das Lösungsmittel mit einem organischen Leitsalz versetzt. Das Gehäuse 1 ist bis zu einer solchen Füllhöhe mit der elektrisch leitfähigen Flüssigkeit 5 gefüllt, daß der Mittelpunkt der Mittelelektrode 3 genau im Flüssigkeitsspiegel liegt.

Die elektrische Zuführung der Außenelektroden 2a,2b, 2a',2b' sowie der Mittelelektrode 3 ist in einen kegelförmigen Isolator 6 eingebettet, dessen Kegelspitze in Richtung der kugelförmigen Mittelelektrode 3 weist. Der Isolator 6 und der Bereich der Durchführung 4 bilden die Dichtung des flüssigkeitsdicht abgekapselten Gehäuses 1.

Die Mittelelektrode 3 ist über den zugehörigen elektrischen Außenanschluß mit einem Konstantstrom beaufschlagt. Dieser ist als Wechselkonstantstrom oder Rechteckkonstantstrom ausgebildet und wird von bekannten Mitteln erzeugt. Von der Oberfläche der Kugelelektrode fließt der eingespeiste Strom radialsymmetrisch in das von der elektrisch leitfähigen Flüssigkeit ausgefüllte Volumen im Innenraum des Gehäuses 1. Die Feldlinien des hierdurch ausgebildeten Strömungsfeldes enden auf den die Mittelelektrode 3 symmetrisch umgebenden Außenelektroden 2a,2b,2a',2b'. Die Feldlinien sind in Figur 1a dargestellt.

Der Bereich des kegelförmigen Isolators 6 ist dabei ebenso von dem elektrischen Strömungsfeld ausgespart wie das sich oberhalb der Mittelelektrode 3 erstreckende Luftvolumen innerhalb des Gehäuses 1.

Bei der in Fig. 1a dargestellten Position des Neigungssensors gemäß der Erfindung ist der in der dargestellten Zeichnungsebene abgebildete Sektorenbereich zwischen Mittelelektrode 3 und den Außenelektroden 2a bzw. 2b jeweils gleich.

Erfolgt nun, wie in Fig. 2 dargestellt ist, eine Schrägstellung des Neigungssensors, wird der in der Zeichnung rechts dargestellte Sektor des ausgebildeten Strömungsfeldes geringer, während derjenige im linken Bereich, also zwischen Mittelelektrode 3 und Außenelektrode 2a, entsprechend zunimmt.

Durch diese Gegenläufigkeit in der Veränderung des elektrischen Strömungsfeldes in Abhängigkeit von der Neigung wird eine lineare Charakteristik des Neigungssensors innerhalb eines Winkelbereichs erreicht, der allein durch den Umfangswinkel der jeweiligen Außenlektroden 2a,2b,2a',2b' begrenzt ist.

Die Erläuterung der Auswertung des mit dem erfindungsgemäßen Neigungssensors erfaßbaren Meßsignales erfolgt im Zusammenhang mit Fig. 3.

Jeder Sektor des zwischen Mittelelektrode und jeweils einer Außenelektrode 2a,2b,2a',2b' ausgebildeten elektrischen Strömungsfeldes kann als elektrischer Leitwert G1-G4 aufgefaßt werden, wobei die Leitwerte G1-G4 zueinander parallel geschaltet sind. Der gemeinsame Anschlußpunkt der Leitwerte G1-G4 ist der Einspeisungspunkt des Konstantstromes im Bereich der kugelförmigen Mittelelektrode 3.

Die Leitwerte G1 und G2 entsprechen dem Sektorenbereich der Außenelektroden 2a,2b, während die Leitwerte G3,G4 den Sektoren zu den Außenelektroden 2a',2b' entsprechen. Das erstgenannte Elektrodenpaar repräsentiert die Längsorientierung des Neigungssensors, während das letztgenannte Elektrodenpaar 2a',2b' die Querrichtung des Neigunssensors darstellt.

Die Summe der Leitwerte G1+G2 bzw. G3+G4 in jedem Zweig (Längs- oder Querzweig) ist stets konstant. Dies ergibt sich aus der Radialsymmetrie des elektrischen Strömungsfeldes, die bei jeder Neigung innerhalb des Maximalwinkels von +/-60° gegeben ist.

Bei einer Veränderung der Schräglage in Längsrichtung vergrößert sich einer der beiden Leitwerte G1,G2, während der andere sich entsprechend verringert. Eine Änderung in Längsrichtung beeinflußt dabei die Leitwertsituation im Querzweig nicht.

Die Gegenläufigkeit ist durch die unterschiedlichen Pfeilrichtungen in Fig. 3 bei den Leitwertpaaren G1,G2 bzw. G3,G4 dargestellt.

Aus der Analyse jeweils eines der Leitwerte eines Leitwertpaares G1,G2 bzw. G3,G4 läßt sich meßtechnisch nunmehr sowohl die Leitwertveränderung in Querrichtung als auch in Längsrichtung zeitgleich erfassen.

Dabei ist es von Bedeutung, daß der an der Mittelelektrode 3 eingespeiste Strom keinen Gleichanteil aufweist, um Elektrolyseerscheinungen bedingt durch die elektrisch leitfähige Flüssigeit im Inneren des Gehäuses 1 zu vermeiden. Bevorzugt wird daher mit einem Wechselstrom oder einem Rechteckstrom konstanter Amplitude gearbeitet.

Durch die erfindungsgemäße Gegenläufigeit der von der elektrisch leitfähigen Flüssigkeit ausgefüllten Teilsektoren entsteht der Vorteil, daß sich temperaturbedingte Erscheinungen, wie Temperaturabhängigkeit der Leitfähigkeit der Flüssigkeit, kompensieren.

Darüber hinaus kompensieren sich auch frequenzabhängige Effekte, die durch die Übergangskapazitäten im Bereich des Überganges zwischen kugelförmiger Mittelelektrode 3 und der elektrisch leitfähigen Flüssigkeit als Grenzflächeneffekte auftreten.

## Patentansprüche

1. Neigungssensor, insbesondere in Kombination mit einer Diebstahlwarnanlage für Automobile, mit einer an dem auf seine Neigung hin zu überwachenden Körper angebrachten und auf die Relativlage des Körpers zur Schwerkraftrichtung empfindlichen Sensoreinheit (2), deren elektrische Ausgangsanschlüsse mit einer Auswerteeinrichtung verbunden sind, aus deren Ausgangssignal die Neigung ermittelbar ist, wobei die Sensoreinheit zur Bestimmung der Neigung in Längs-und/oder in Querrichtung aus mindestens zwei Paaren konzentrisch angeordneter Außenelektroden (2a,2b;2a'2b') und aus einer dazu zentralen kugelförmigen Mittelelektrode (3) besteht,
**dadurch gekennzeichnet,** daß die Sensoreinheit (2) innerhalb eines Gehäuses (1) angeordnet ist, mittels dessen sie an dem zu überwachenden Körper angebracht ist, wobei das Gehäuse (1) als Hohlkugel ausgebildet ist, deren Zentrum die Mittelelektrode bildet, und teilweise derart mit einer elektrisch leitfähigen Flüssigkeit ausgefüllt ist, daß die Mittelelektrode (3) in der Höhe der Flüssigkeitsoberfläche liegt, und daß die konzentrischen Außenelektroden (2a,2b;2a'2b') eine drahtförmige Struktur aufweisen und in einer zur Sensorhochachse parallelen Ebene teilkreisförmig gebogen sind, wobei die durch die neigungsabhängige Relativlage zwischen der Flüssigkeitsoberfläche und der Elektrodenanordnung (2a,2b,3) bedingte Änderung des zwischen den Außenelektroden und der Mittelelektrode ausgebildeten radialen elektrischen Strömungsfeldes über eine Widerstandsmeßeinrichtung erfaßbar ist, deren Ausgangssignal der Auswerteeinrichtung zuführbar ist.

2. Neigungssensor nach Anspruch 1,
**dadurch gekennzeichnet,** daß die Außenelektroden (2a,2b) jeweils eines Paars der mindestens zwei Paar konzentrischer Außenelektroden (2a,2b) in einer gemeinsamen, zur Hochachse parallelen Ebenen gegenüberliegend angeordnet und teilkreisförmig gekrümmt sind und daß die den mindestens zwei Paaren (2a,2b) zugeordneten parallelen Ebenen senkrecht zueinander stehen.

3. Neigungssensor nach Anspruch 2,
**dadurch gekennzeichnet,** daß die Änderung des elektrischen Strömungsfeldes mittels einer herkömmlichen Wheatstone'schen Brückenschaltung meßbar ist, wobei das Meßsignal in ein Meßsignal für die Neigung in Längsrichtung und in ein Meßsignal für die Querrichtung über Frequenz- bzw. Zeitmultiplexbetrieb zerlegbar ist.

4. Neigungssensor nach einem der Ansprüche 1-3,
**dadurch gekennzeichnet,** daß die Mittelelektrode mit einem Konstantstrom, insbesondere einem Konstant-Wechselstrom oder Konstant-Rechteckstrom beaufschlagbar ist und daß das Meßsignal für Längs- bzw. Querneigung zeitparallel auswertbar ist durch Erfassung jeweils mindestens eines der beiden Teilströme eines in Längs- bzw. in Querrichtung verlaufenden Zweiges.

5. Neigungssensor nach einem der vorhergehenden Ansprüche,
**dadurch gekennzeichnet**, daß der Überdeckungswinkel der teilkreisförmig gebogenen Außenelektroden mindestens 60° und höchstens 120° beträgt.

6. Neigungsensor nach einem der vorhergehenden Ansprüche,
**dadurch gekennzeichnet**, daß die Mittelelektrode (3) als quasi-punktförmige Kugelelektrode ausgebildet ist.

7. Neigungssensor nach Anspruch 6,
**dadurch gekennzeichnet**,daß die Verbindung zwischen der Kugelelektrode und ihrem Ausgangsanschluß elektrisch isolierend gestaltet ist.

8. Neigungssensor nach Anspruch 7,
**dadurch gekennzeichnet,** daß der elektrisch isolierende Bereich der Mittelelektrode kegelförmig ausgebildet ist.

9. Neigungsensor nach Anspruch 8,
**dadurch gekennzeichnet,** daß der kegelförmige Bereich auch die Zuführleitungen für die Außenelektroden (2a,2b,2a',2b') von Ihren Ausgangsanschlüssen umfaßt.

## Claims

1. A tilt sensor, especially in combination with a car theft alarm for automobiles, with a sensor unit (2) on the body whose tilt is being monitored that senses the relative position of the body to the direction of gravity, and whose electrical output terminals are connected to an evaluation unit that determines the tilt from the output signal, whereby the sensor unit to determine the lengthwise and/or transverse tilt consists of at least two pairs of concentric outer electrodes (2a, 2b; 2a', 2b') and a central spherical middle electrode (3),
characterized in that the sensor unit (2) is in a housing (1) that is used to mount the sensor to the monitored body, and the housing (1) is designed as a hollow sphere whose center forms the middle electrode, and it is partially filled with an electrically-conductive liquid; the middle electrode (3) is at the height of the liquid surface (3), and the concentric outer electrodes (2a, 2b; 2a', 2b') have a wire-like structure, and the sensors are in a graduated circle in a plane that is parallel to the sensor's vertical axis, whereby the change of the radial electrical field between the outer electrodes and middle electrode that is caused by the tilt-related relative position of the liquid surface to the electrode arrangement (2a, 2b, 3) is detected via a resistance meter whose output signal is fed to the evaluating device.

2. The tilt sensor according to claim 1, characterized in that the outer electrodes (2a, 2b) of one pair of the at least two pairs of concentric outer electrodes (2a, 2b) oppose each other in common planes parallel to the vertical axis in a graduated circle, and the parallel planes assigned to at least two pairs (2a, 2b) are parallel to each other.

3. The tilt sensor according to claim 2, characterized in that the change of the electrical field is measurable with a conventional Wheatstone bridge circuit, and the measured signal can be divided into a measuring signal for the lengthwise tilt and a measuring signal for the transverse direction in frequency or time-division mutiplex operation.

4. The tilt sensor according to one of claims 1 - 3, characterized in that the middle electrode can receive a constant current, especially a constant alternating current or rectangular current, and the measuring signals for the lengthwise and transverse tilt can be measured simultaneously by detecting at least one of the two partial currents of a branch running in the lengthwise and transverse direction.

5. The tilt sensor according to one of the prior claims, characterized in that angle of overlap of the graduated-curve outer electrodes is at least 60° and a maximum of 120°.

6. The tilt sensor according to one of the prior claims, characterized in that the middle electrode (3) is designed as a quasi-point-shaped sphere electrode.

7. The tilt sensor according to claim 6, characterized in that connection between the sphere electrode and its output terminal is electrically insulated.

8. The tilt sensor according to claim 7, characterized in that electrically insulated area of the middle electrode is spherical.

9. The tilt sensor according to claim 8, characterized in that spherical area also includes the feed lines for the outer electrodes (2a, 2b, 2a', 2b') from their output terminals.

## Revendications

1. Capteur d'inclinaison, notamment en combinaison avec une installation d'avertissement de vol pour véhicule automobile, comprenant une unité de capteur (2) montée sur le corps dont l'inclinaison doit être surveillée et sensible à l'orientation relative du corps par rapport au sens de la gravité, unité dont les raccords de sortie électriques sont reliés à un dispositif d'évaluation, l'inclinaison pouvant être déterminée à partir des signaux de sortie de ce dispositif d'évaluation, l'unité de capteur, afin de déterminer l'inclinaison en direction longitudinale et/ou direction transversale, étant constituée d'au moins deux paires d'électrodes extérieures (2a, 2b ; 2a', 2b') qui sont disposées de façon concentrique et d'une électrode centrale (3) sphérique centrale par rapport aux électrodes extérieures, caractérisé en ce que l'unité de capteur (2) est disposée à l'intérieur d'un boîtier (1) au moyen duquel elle est montée sur le corps à surveiller, le boîtier (1) étant en forme de sphère creuse dont le centre est formé par l'électrode centrale et étant rempli partiellement d'un liquide électriquement conducteur de sorte que l'électrode centrale (3) se trouve au niveau de la surface du liquide, et en ce que les électrodes extérieures (2a, 2b ; 2a', 2b') concentriques présentent une structure en forme de fil métallique et sont recourbées en forme d'arc de cercle dans un plan parallèle à l'axe vertical du capteur, la variation du champ d'écoulement électrique radial formé entre les électrodes extérieures et l'électrode centrale, variation qui est dûe à l'orientation relative dépendante de l'inclinaison entre la surface du liquide et l'agencement d'électrodes (2a, 2b, 3), pouvant être captée par un dispositif de mesure de résistance dont le signal de sortie peut être envoyé au dispositif d'évaluation.

2. Capteur d'inclinaison selon la revendication 1, caractérisé en ce que les électrodes extérieures (2a, 2b) de chacune des paires des au moins deux paires d'électrodes extérieures concentriques (2a, 2b) sont disposées, l'une en face de l'autre, dans un plan commun s'étendant parallèlement à l'axe vertical, et recourbées en forme d'arc de cercle, et en ce que les plans s'étendant parallèlement associés aux au moins deux paires (2a, 2b) s'étendent perpendiculairement l'un à l'autre.

3. Capteur d'inclinaison selon la revendication 2, caractérisé en ce que la variation du champ d'écoulement électrique peut être mesurée au moyen d'un circuit de pont Wheatstone classique, le signal de mesure pouvant être décomposé en un signal de mesure pour l'inclinaison selon la direction longitudinale et en un signal de mesure pour la direction transversale, par l'intermédiaire d'un fonctionnement en multiplexage de fréquences ou de temps.

4. Capteur d'inclinaison selon l'une des revendications 1 à 3, caractérisé en ce que l'électrode centrale peut être soumise à un courant constant, notamment à un courant alternatif constant ou à un courant crénelé constant, et en ce que le signal de mesure de l'inclinaison longitudinale ou de l'inclinaison transversale peut être évalué parallèlement dans le temps par la saisie d'au moins l'un des deux courants partiels respectifs d'une branche s'étendant dans la direction longitudinale ou dans la direction transversale.

5. Capteur d'inclinaison selon l'une des revendications précédentes, caractérisé en ce que l'angle de recouvrement des électrodes extérieures recourbées en forme d'arc de cercle s'élève au moins à 60° et au maximum à 120°.

6. Capteur d'inclinaison selon l'une des revendications précédentes, caractérisé en ce que l'électrode centrale (3) est formée en une électrode sphérique quasi ponctuelle.

7. Capteur d'inclinaison selon la revendication 6, caractérisé en ce que la liaison entre l'électrode sphérique et son raccord de sortie est formée en isolateur électrique.

8. Capteur d'inclinaison selon la revendication 7, caractérisé en ce que la zone électriquement isolante de l'électrode centrale est en forme de cône.

9. Capteur d'inclinaison selon la revendication 8, caractérisé en ce que la zone en forme de cône comprend également les lignes d'alimentation des électrodes extérieures (2a, 2b, 2a', 2b') à partir de leurs raccords de sortie.
